# EUROPEAN PATENT SPECIFICATION

(11) **EP 2 573 360 B1**
(45) Date of publication and mention of the grant of the patent: **22.05.2019**
(21) Application number: 12184388.2
(22) Date of filing: 14.09.2012
(51) Int. Cl.: F02C 6/00, F02C 6/04, F02C 6/18, F02C 7/224

(54) **Fuel heating in combined cycle turbomachinery**
Kraftstofferwärmung in einer kombinierten Zyklusturbomaschine
Combustible de chauffage dans des turbomachines à cycle combiné

(30) Priority: 23.09.2011 US 201113241420
(43) Date of publication of application: 27.03.2013
(73) Proprietor: GENERAL ELECTRIC COMPANY, Schenectady, NY 12345 (US)
(72) Inventor: Sholes, John Edward, Schenectady, NY New York 12345 (US); Beadie, Douglas Frank, Schenectady, OH Ohio 12345 (US); Mundra, Kamlesh, Schenectady, NY New York 12345 (US)
(74) Representative: Fischer, Michael Maria

(56) References cited:
- EP-A1- 1 199 445
- EP-A2- 0 931 911
- EP-A2- 1 065 347
- EP-A2- 1 752 617
- DE-A1- 10 006 497

## Description

### BACKGROUND OF THE INVENTION

The invention relates to combined cycle turbomachinery and, more particularly, to improving combined cycle efficiency by heating fuel in a gas turbine fuel line into stages.

Combined cycle turbomachines utilize gas turbines (GT(s)) as prime movers to generate power. These GT engines operate on the Brayton Cycle thermodynamic principle and typically have high exhaust flows and relatively high exhaust temperatures. These exhaust gases, when directed into a heat recovery boiler (typically referred to as a heat recovery steam generator (HRSG)), produce steam that can be used to generate more power. The produced steam can be directed to a steam turbine (ST) to produce additional power. In this manner, a GT produces work via the Brayton Cycle, and a ST produces power via the Rankine Cycle. Thus, the name "combined cycle" is derived.

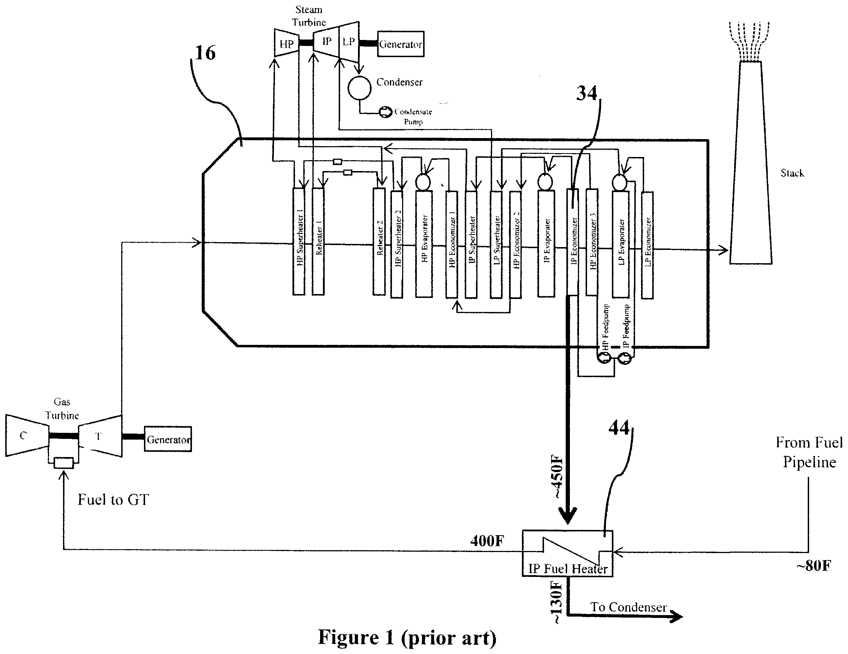

Fuel gas heating in combined cycle turbomachinery is typically performed to increase the thermal efficiency. In one previous approach, with reference to FIG. 1, hot water extracted from the exit of an IP economizer 34 (i.e., the water entering an IP evaporator) of a heat recovery steam generator (HRSG) 16 is used for fuel gas heating in a fuel heater 44. In this approach, the maximum fuel gas heating temperature is limited by the temperature of the extracted water, which is typically lower than the saturation temperature of the IP evaporator. This approach limits fuel gas heating, thus limiting the efficiency of combined cycle turbomachinery using IP water.

Although higher fuel gas heating temperature improves the thermal efficiency of a turbomachine, a higher operating pressure of the IP evaporator has a detrimental effect on the steam cycle power output and the thermal efficiency of the machine. Therefore, the IP evaporator is typically operated at an optimum pressure in a combined cycle turbomachine, thus limiting the fuel gas heating temperature and the efficiency of the machine.

In order to increase the temperature of the water available for fuel gas heating, water from high pressure (HP) economizers upstream of the IP evaporator may be used. However, using high pressure water considerably increases the cost of fuel gas heating while presenting a reliability concern in the event of a failure. In one known design, the available IP water temperature has limited fuel gas heating to 185°C (365°F). Thus, there is a need to improve the thermal cycle efficiency of combined cycle turbomachinery to overcome the problems faced by prior systems.

EP 0 931 911 describes an arrangement in which water from a high pressure economizer or an intermediate pressure economizer is used to preheat fuel.

DE 100 06 497 describes an arrangement in which water from different stages of a gear turbine is mixed and used to preheat fuel.

### BRIEF DESCRIPTION OF THE INVENTION

In a first aspect, the invention resides in a method of improving efficiency of a combined cycle turbomachine includes the steps of (a) providing a fuel line for inputting fuel into the gas turbine; and (b) heating the fuel in two stages using (i) hot water from an HP economizer of a heat recovery steam generator (HRSG) in a second stage that heats the fuel to a second temperature, and (ii) hot water from an IP economizer of the HRSG and water output flow from the second stage in a first stage that heats the fuel to a first temperature lower than the second temperature.

Step (b) may comprise (b1) heating the fuel in a first fuel heater using water input from an intermediate pressure economizer of the HRSG to an inlet of the first fuel heater; (b2) heating the fuel in a second fuel heater downstream from the first fuel heater using water input from a high pressure economizer of the HRSG; and (b3) directing water output from the second fuel heater to the inlet of the first fuel heater.

In another aspect of the invention, a fuel heating circuit is utilized in a combine cycle turbomachine. The turbomachine includes a gas turbine, a heat recovery steam generator (HRSG) receiving gas turbine exhaust and generating steam, and a steam turbine receiving the steam from the HRSG. The fuel heating circuit includes a fuel line that supplies fuel to the gas turbine, a first heater on the fuel line that receives hot water output from an intermediate pressure economizer of the HRSG via a heater inlet, and a second heater on the fuel line downstream from the first heater that receives hot water output from a high pressure economizer of the HRSG. An output line from the second heater delivers water output from the second heater to the heater inlet of the first fuel heater.

### BRIEF DESCRIPTION OF THE DRAWINGS

Embodiments of the present invention will now be described, by way of example only, with reference to the accompanying drawings in which:
FIG. 1 shows a prior art arrangement for fuel gas heating in combined cycle turbomachinery;
FIG. 2 is a schematic diagram showing a combined cycle turbomachine with a modified fuel heating circuit in accordance with the invention; and
FIG. 3 is a schematic diagram showing an exemplary combined cycle turbomachine with a modified fuel heating circuit with a pre-heater and multiple water injection.

### DETAILED DESCRIPTION OF THE INVENTION

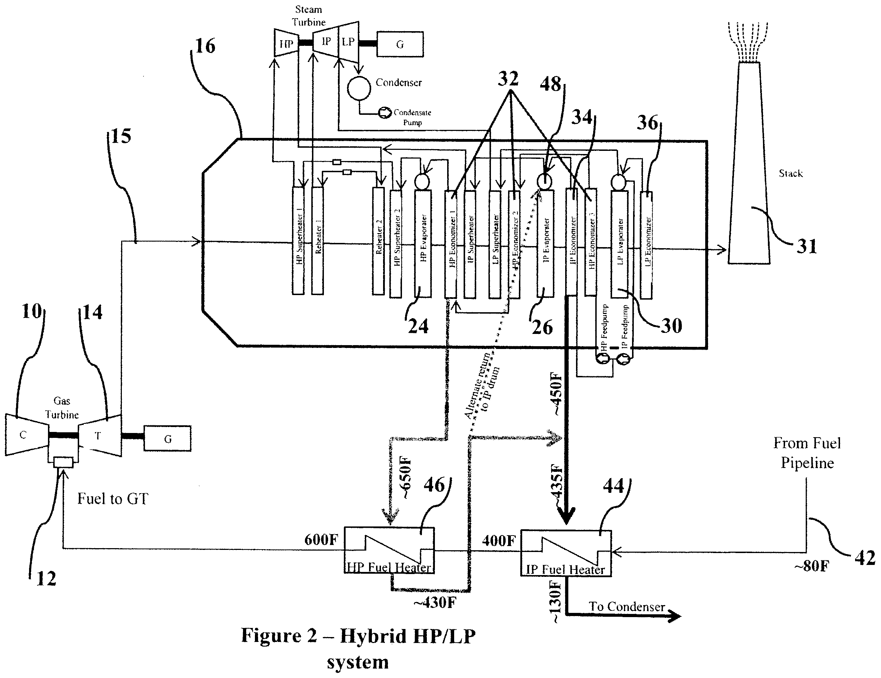

FIG. 2 illustrates a schematic flow diagram of a three-pressure combined cycle turbomachine. The machine includes a compressor 10, a combustor 12, and a turbine 14 powered by expanding hot gases produced in the combustor 12 for driving an electrical generator G. Exhaust gases from the gas turbine 14 are supplied through conduit 15 to a heat recovery steam generator (HRSG) 16 for recovering waste heat from the exhaust gases. The HRSG includes high pressure (HP), intermediate pressure (IP), and low pressure (LP) sections. Each of the HP, IP, and LP sections includes an evaporator section 24, 26, 30, respectively, and an economizer section 32, 34, 36, respectively, for pre-heating water before it is converted to steam in the respective evaporator section. Water is fed to the HRSG 16 to generate steam. Heat recovered from the exhaust gases supplied to the HRSG 16 is transferred to water/steam in the HRSG 16 for producing steam which is supplied to a steam turbine ST for driving a generator. Cooled gases from the HRSG 16 are discharged into atmosphere via an exit duct or stack 31.

With continued reference to FIG. 2, a fuel line 42 carries fuel for the gas turbine 14. Without heating, the fuel is typically at a temperature of about 26.7°C (80°F).

A first fuel heater or IP fuel heater 44 is provided in a heat exchange relationship with the fuel line 42, and the fuel is heated with water flow which is a combination of flow from the IP economizer 34 mixed with the outlet water flow from the HP fuel heater 46.

The output from the IP economizer 34 is typically about 232°C (450°F), which when combined with the 221.1°C (430°F) outlet water flow from the HP fuel heater produces an inlet water flow to the IP fuel heater of about 223.9°C (435°F) and itself could heat the fuel to temperatures of about 204.4°C (400°F).

In order to increase the fuel temperature, the fuel is further heated in a second fuel heater or HP fuel heater 46 on the fuel line 42 downstream from the first heater 44.

The second fuel heater 46 utilizes flow from the HP economizer 32, which discharge flow is typically about 343.3°C (650°F). Discharge water from the HP fuel heater 46 at a temperature of about 221.1°C (430°F) may then be mixed with the incoming flow entering the IP fuel heater 44. Alternatively, as shown in FIG. 2, the discharge water can be returned to the IP drum 48. By mixing the HP fuel heater discharge water with the incoming flow entering the IP fuel heater 44, less water flow will be required from the IP economizer 34, resulting in better efficiency. Fuel from the IP fuel heater 44 can reach temperatures of 204.4°C (400°F), and fuel leaving the HP fuel heater 46 can reach temperatures of 315.5°C (600°F) before input to the gas turbine 14.

Using the HP economizer flow will result in an increase in efficiency, but at a cost of combined cycle output. In an exemplary embodiment, the output can be replaced and additional efficiency realized using LP water injection and fuel preheating.

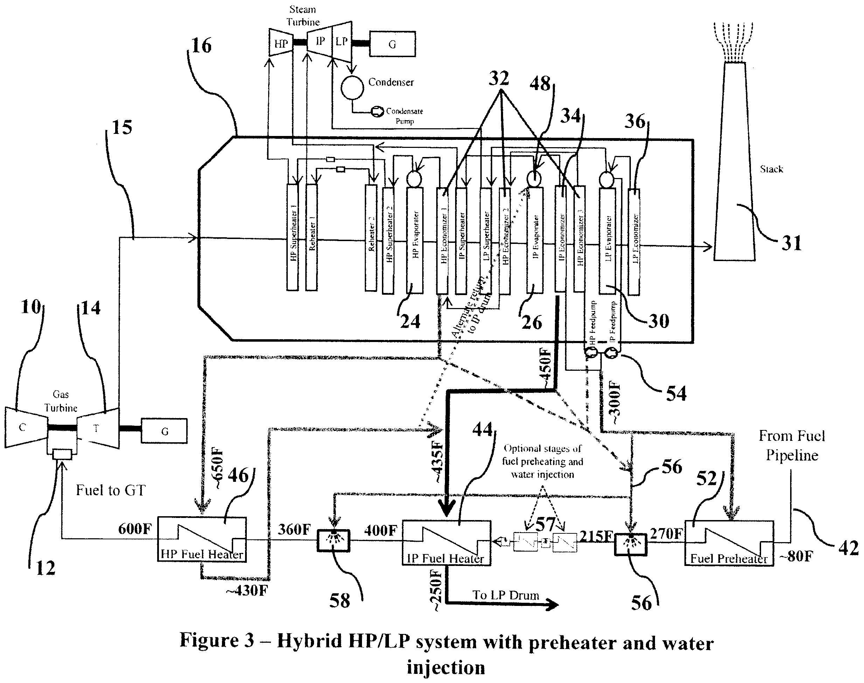

With reference to FIG. 3, a fuel preheater 52 may be positioned upstream of the IP fuel heater 44. The fuel preheater 52 is in a heat exchange relationship with the fuel line and uses tube and shell heat exchangers with discharge from an IP feed pump 54 to heat the fuel to about 132.2°C (270°F). Subsequently, a section of pipe spray 56, with water either from the IP feed pump discharge (or HP feed pump discharge if higher pressure is required to fully atomize the water spray), water is injected/mixed with the fuel in the preheater injector 56. The water may also be supplied from the IP or HP economizer outlet if higher temperature water is required to fully atomize the water spray. The amount of water injection is regulated so as to reach moisture saturation of the fuel.

The fuel temperature after water injection can reach up to 300°F using additional LP feed water, and in some embodiments, the water may be injected again 57. Each successive water injection brings the fuel moisture closer to about 10% water by volume. The increase in fuel moisture, however, is smaller with each successive heating/water injection cycle. In a preferred construction, three cycles of water injection can be used, but a cost performance trade can be calculated to determine a number of justified cycles. After the preheating/water injection process, the fuel is directed to the IP fuel heater 44.

After the fuel is heated in the IP fuel heater, a section of pipe spray 56, with water from the IP feed pump discharge (or HP feed pump discharge if higher pressure is required to fully atomize the water spray), water is injected/mixed with the fuel in the IP injector 58. The amount of water injection is regulated so as to reach moisture saturation of the fuel.

The saturated fuel is then superheated in the HP fuel heater, giving adequate safety of downstream valves and equipment from damage from fuel borne water droplets.

The system serves to improve combined cycle efficiency. In at least one combined cycle turbomachine, efficiency is increased by 0.2% with increased output of 5-8 MW.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the appended claims.

## Claims

1. A method of improving efficiency of a combined cycle turbomachine, the method comprising:
(a) providing a fuel line (42) for inputting fuel into the gas turbine; and
(b) heating the fuel in two stages (44,46) using (i) hot water from an HP economizer (32) of a heat recovery steam generator (HRSG) (16) in a second stage that heats the fuel to a second temperature, and (ii) hot water from an IP economizer (34) of the HRSG and water output flow from the second stage (46) in a first stage (44) that heats the fuel to a first temperature lower than the second temperature.

2. The method of claim 1, wherein step (b) further comprises:
(b1) heating the fuel in a first fuel heater (44) using water input from an intermediate pressure economizer (34) of the HRSG (16) to an inlet of the first fuel heater (44);
(b2) heating the fuel in a second fuel heater (46) downstream from the first fuel heater (44) using water input from a high pressure economizer (32) of the HRSG (16); and
(b3) directing water output from the second fuel heater (46) to one of an intermediate pressure section (48) of the HRSG (16) or the inlet of the first fuel heater (44).

3. A method according to claim 2, wherein step (b3) is practiced by directing water output from the second fuel heater (46) to the inlet of the first fuel heater (44).

4. A method according to any of claims 1 to 3, further comprising, prior to step (b), preheating the fuel with water supplied from a feedpump (54) and then injecting water from the feedpump (54) into the fuel.

5. A method according to claim 4, wherein the water for the feedpump is supplied from one of intermediate pressure feedpump (54) discharge or high pressure feedpump discharge.

6. A method according to claim 4, wherein the step of injecting the water from the feedpump (54) into the fuel is practiced by spraying the water via a spray pipe (56) into contact with the fuel.

7. A method according to any of claims 4 to 6, wherein the step of injecting the water from the feedpump into the fuel is practiced until the fuel reaches moisture saturation.

8. A method according to any preceding claim, wherein the steps of the method are practiced to increase a temperature of the fuel to 260-315.5°C (500-600°F).

9. A fuel heating circuit for a combined cycle turbomachine, the turbomachine including a gas turbine, a heat recovery steam generator (HRSG) receiving gas turbine exhaust and generating steam, and a steam turbine receiving the steam from the HRSG, the fuel heating circuit comprising:
a fuel line (42) that supplies fuel to the gas turbine (14);
a first heater (44) on the fuel line (42), the first heater (44) receiving hot water output from an intermediate pressure economizer (34) of the HRSG (16) via a heater inlet;
a second heater (46) on the fuel line (42), downstream from the first heater (44), the second heater (46) receiving hot water output from a high pressure economizer (32) of the HRSG (16) ; and
an output line from the second heater (46) delivering water output from the second heater (46) to the heater inlet of the first fuel heater (44).

10. A fuel heating circuit according to claim 9, wherein the output line from the second heater (46) delivers water output from the second heater (46) to the heater inlet of the first fuel heater (44).

11. A fuel heating circuit according to claim 9 or 10, further comprising a fuel preheater (52) upstream of the first heater (44), the fuel preheater (52) preheating the fuel with water supplied from a feedpump (54) and then injecting water from the feedpump (54) into the fuel.

12. A fuel heating circuit according to claim 11, wherein the water for the feedpump (54) is supplied from one of intermediate pressure feedpump discharge or high pressure feedpump discharge.

13. A fuel heating circuit according to claim 11, comprising a spray pipe (56) positioned to spray the water from the feedpump into the fuel.

## Patentansprüche

1. Verfahren zum Verbessern des Wirkungsgrades einer kombinierten Zyklusturbomaschine, wobei das Verfahren umfasst:
(a) Bereitstellen einer Kraftstoffleitung (42) zum Zuführen von Kraftstoff in die Gasturbine; und
(b) Erwärmen des Kraftstoffs in zwei Stufen (44, 46) unter Verwendung von (i) heißem Wasser aus einem Hochdruck-Abgasvorwärmer (32) eines Abwärme-Dampfgenerators (HRSG) (16) in einer zweiten Stufe, die den Kraftstoff auf eine zweite Temperatur erwärmt, und (ii) heißem Wasser aus einem Zwischendruck-Abgasvorwärmer (34) des HRSG und einem Wasserausgangsstrom aus der zweiten Stufe (46) in eine erste Stufe (44), die den Kraftstoff auf eine erste Temperatur erwärmt, die niedriger als die zweite Temperatur ist.

2. Verfahren nach Anspruch 1, wobei Schritt (b) weiter umfasst:
(b1) Erwärmen des Kraftstoffs in einem ersten Kraftstoff-Heizgerät (44) unter Verwendung eines Wassereingangs von einem Zwischendruck-Abgasvorwärmer (34) des HRSG (16) zu einem Einlass des ersten Kraftstoff-Heizgeräts (44);
(b2) Erwärmen des Kraftstoffs in einem zweiten Kraftstoff-Heizgerät (46) stromabwärts des ersten Kraftstoff-Heizgeräts (44) unter Verwendung eines Wassereingangs von einem Hochdruck-Abgasvorwärmer (32) des HRSG (16); und
(b3) Leiten des Wasserausgangs aus dem zweiten Kraftstoff-Heizgerät (46) zu einem Zwischendruckabschnitt (48) des HRSG (16) oder Einlass des ersten Kraftstoff-Heizgeräts (44).

3. Verfahren nach Anspruch 2, wobei Schritt (b3) durch Leiten des Wasserausgangs von dem zweiten Kraftstoff-Heizgerät (46) zu dem Einlass des ersten Kraftstoff-Heizgeräts (44) durchgeführt wird.

4. Verfahren nach einem der Ansprüche 1 bis 3, weiter umfassend, vor Schritt (b), das Vorwärmen des Kraftstoffs mit Wasser, das von einer Förderpumpe (54) zugeführt wird, und dann Einspritzen von Wasser aus der Förderpumpe (54) in den Kraftstoff.

5. Verfahren nach Anspruch 4, wobei das Wasser für die Förderpumpe entweder von einem Ablass der Zwischendruck-Förderpumpe (54) oder einem Ablass der Hochdruck-Förderpumpe zugeführt wird.

6. Verfahren nach Anspruch 4, wobei der Schritt des Einspritzens des Wassers von der Förderpumpe (54) in den Kraftstoff durch Sprühen des Wassers über ein Sprührohr (56) in Kontakt mit dem Kraftstoff durchgeführt wird.

7. Verfahren nach einem der Ansprüche 4 bis 6, wobei der Schritt des Einspritzens des Wassers von der Förderpumpe in den Kraftstoff durchgeführt wird, bis der Kraftstoff eine Feuchtigkeitssättigung erreicht.

8. Verfahren nach einem der vorstehenden Ansprüche, wobei die Schritte des Verfahrens durchgeführt werden, um eine Temperatur des Kraftstoffs auf 260-315,5 °C (500-600 °F) zu erhöhen.

9. Kraftstofferwärmungskreis für eine kombinierte Zyklusturbomaschine, wobei die Turbomaschine eine Gasturbine, einen Abwärme-Dampfgenerator (HRSG), der Gasturbinenabgas aufnimmt und Dampf erzeugt, und eine Dampfturbine, die den Dampf von dem HRSG aufnimmt, aufweist, wobei der Kraftstofferwärmungskreis umfasst:
eine Kraftstoffleitung (42), die der Gasturbine (14) Kraftstoff zuführt;
ein erstes Heizgerät (44) an der Kraftstoffleitung (42), wobei das erste Heizgerät (44) einen Heißwasserausgang von einem Zwischendruck-Abgasvorwärmer (34) des HRSG (16) über einen Heizgeräteinlass aufnimmt;
ein zweites Heizgerät (46) an der Kraftstoffleitung (42) stromabwärts des ersten Heizgeräts (44), wobei das zweite Heizgerät (46) den Heißwasserausgang von einem Hochdruck-Abgasvorwärmer (32) des HRSG (16) aufnimmt; und
eine Auslassleitung von dem zweiten Heizgerät (46), die den Wasserausgang von dem zweiten Heizgerät (46) dem Heizgeräteinlass des ersten Kraftstoff-Heizgeräts (44) zuführt.

10. Kraftstofferwärmungskreis nach Anspruch 9, wobei die Auslassleitung aus dem zweiten Heizgerät (46) einen Wasserausgang aus dem zweiten Heizgerät (46) dem Heizgeräteinlass des ersten Kraftstoff-Heizgeräts (44) zuführt.

11. Kraftstofferwärmungskreis nach einem der Ansprüche 9 oder 10, weiter umfassend einen Kraftstoffvorwärmer (52) stromaufwärts des ersten Heizgeräts (44), wobei der Kraftstoffvorwärmer (52) den Kraftstoff mit Wasser, das von einer Förderpumpe (54) zugeführt wird, vorwärmt und dann das Wasser aus der Förderpumpe (54) in den Kraftstoff einspritzt.

12. Kraftstofferwärmungskreis nach Anspruch 11, wobei das Wasser für die Förderpumpe (54) entweder von einem Ablass der Zwischendruck-Förderpumpe oder einem Ablass der Hochdruck-Förderpumpe zugeführt wird.

13. Kraftstofferwärmungskreis nach Anspruch 11, umfassend ein Sprührohr (56), das zum Sprühen des Wassers aus der Förderpumpe in den Kraftstoff positioniert ist.

## Revendications

1. Procédé d'amélioration du rendement d'une turbomachine à cycle combiné, le procédé comprenant :
(a) la fourniture d'une conduite de carburant (42) pour introduire du carburant dans la turbine à gaz ; et
(b) le chauffage du carburant dans deux étages (44, 46) en utilisant (i) de l'eau chaude venant d'un économiseur HP (32) d'un générateur de vapeur à récupération de chaleur (HRSG) (16) dans un second étage qui chauffe le carburant à une seconde température et (ii) de l'eau chaude d'un économiseur IP (34) du HRSG et un écoulement de sortie d'eau du second étage (46) dans un premier étage (44) qui chauffe le carburant à une première température inférieure à la seconde température.

2. Procédé selon la revendication 1, dans lequel l'étape (b) comprend en outre :
(b1) le chauffage du carburant dans un premier dispositif de chauffage de carburant (44) en utilisant une entrée d'eau d'un économiseur à pression intermédiaire (34) du HRSG (16) à une entrée du premier dispositif de chauffage de carburant (44) ;
(b2) le chauffage du carburant dans un second dispositif de chauffage de carburant (46) en aval du premier dispositif de chauffage de carburant (44) en utilisant une entrée d'eau d'un économiseur haute pression (32) du HRSG (16) ; et
(b3) l'acheminement d'une sortie d'eau du second dispositif de chauffage de carburant (46) à l'une d'une section de pression intermédiaire (48) du HRSG (16) ou de l'entrée du premier dispositif de chauffage de carburant (44).

3. Procédé selon la revendication 2, dans lequel l'étape (b3) est mise en oeuvre en acheminant une sortie d'eau du second dispositif de chauffage de carburant (46) à l'entrée du premier dispositif de chauffage de carburant (44).

4. Procédé selon l'une quelconque des revendications 1 à 3, comprenant en outre, avant l'étape (b), le préchauffage du carburant avec de l'eau fournie par une pompe d'alimentation (54) et l'injection ensuite d'eau de la pompe d'alimentation (54) dans le carburant.

5. Procédé selon la revendication 4, dans lequel l'eau pour la pompe d'alimentation est fournie par l'une d'une décharge de pompe d'alimentation à pression intermédiaire (54) ou de décharge de pompe d'alimentation haute pression.

6. Procédé selon la revendication 4, dans lequel l'étape d'injection de l'eau de la pompe d'alimentation (54) dans le carburant est mise en oeuvre en pulvérisant l'eau via un tuyau de pulvérisation (56) en contact avec le carburant.

7. Procédé selon l'une quelconque des revendications 4 à 6, dans lequel l'étape d'injection de l'eau de la pompe d'alimentation dans le carburant est mise en oeuvre jusqu'à ce que le carburant atteigne une saturation d'humidité.

8. Procédé selon l'une quelconque des revendications précédentes, dans lequel les étapes du procédé sont mises en oeuvre pour augmenter une température du carburant à 260-315,5 °C (500-600 °F).

9. Circuit de chauffage de carburant pour une turbomachine à cycle combiné, la turbomachine comprenant une turbine à gaz, un générateur de vapeur à récupération de chaleur (HRSG) recevant l'échappement de la turbine à gaz et générant de la vapeur, et une turbine à vapeur recevant la vapeur du HRSG, le circuit de chauffage de carburant comprenant :
une conduite de carburant (42) qui fournit du carburant à la turbine à gaz (14) ;
un premier dispositif de chauffage (44) sur la conduite de carburant (42), le premier dispositif de chauffage (44) recevant une sortie d'eau chaude d'un économiseur à pression intermédiaire (34) du HRSG (16) via une entrée de dispositif de chauffage ;
un second dispositif de chauffage (46) sur la conduite de carburant (42) en aval du premier dispositif de chauffage (44), le second dispositif de chauffage (46) recevant de l'eau chaude délivrée d'un économiseur haute pression (32) du HRSG (16) ; et
une conduite de sortie du second dispositif de chauffage (46) fournissant une sortie d'eau du second dispositif de chauffage (46) à l'entrée du premier dispositif de chauffage (44).

10. Circuit de chauffage de carburant selon la revendication 9, dans lequel la conduite de sortie du second dispositif de chauffage (46) fournit une sortie d'eau du second dispositif de chauffage (46) à l'entrée du premier dispositif de chauffage (44).

11. Circuit de chauffage de carburant selon la revendication 9 ou 10, comprenant en outre un dispositif de préchauffage de carburant (52) en amont du premier dispositif de chauffage (44), le dispositif de préchauffage de carburant (52) préchauffant le carburant avec de l'eau fournie par une pompe d'alimentation (54) et l'injection ensuite d'eau de la pompe d'alimentation (54) dans le carburant.

12. Circuit de chauffage de carburant selon la revendication 11, dans lequel l'eau pour la pompe d'alimentation (54) est fournie par l'une d'une décharge de pompe d'alimentation à pression intermédiaire ou d'une décharge de pompe d'alimentation haute pression.

13. Circuit de chauffage de carburant selon la revendication 11, comprenant un tuyau de pulvérisation (56) positionné pour pulvériser l'eau venant de la pompe d'alimentation dans le carburant.
